# EUROPÄISCHE PATENTSCHRIFT

(11) **EP 0 340 839 B1**
(45) Veröffentlichungstag und Bekanntmachung des Hinweises auf die Patenterteilung: **25.05.1994**
(21) Anmeldenummer: 89201046.3
(22) Anmeldetag: 22.04.1989
(51) Int. Cl.: F16C 33/20

(54) **Werkstoff für Verbundlager und Verfahren zu seiner Herstellung**
Bearings material and process for its preparation
Matériau pour paliers et sa préparation

(30) Priorität: 05.05.1988 DE 3815264
(43) Veröffentlichungstag der Anmeldung: 08.11.1989
(73) Patentinhaber: KOLBENSCHMIDT Aktiengesellschaft, D-74150 Neckarsulm (DE)
(72) Erfinder: Matucha, Karl-Heinz, Dr., D-6233 Kelkheim (DE); Steffens, Thomas, Dr., D-6050 Offenbach (DE); Baureis, Hans-Paul, D-6909 Dielheim-Horrenberg (DE); Bickle, Wolfgang, D-6831 Reilingen (DE); Braus, Jürgen, D-6909 Walldorf (DE)
(74) Vertreter: Dreiss, Fuhlendorf, Steimle & Becker, Patentanwälte

(56) Entgegenhaltungen:
- EP-A- 0 044 577
- EP-A- 0 183 375
- DE-A- 3 520 068
- DE-C- 2 928 081
- GB-A- 2 036 194
- US-A- 3 939 027

## Beschreibung

Die Erfindung betrifft einen Werkstoff für Verbundlager mit Kunststoff-Gleitschicht, der aus einer metallischen Stützschicht, vorzugsweise aus Stahl, Bronze oder einer hochfesten Aluminiumlegierung, und einer damit verbundenen 30 bis 500 µm, vorzugsweise 50 bis 250 µm, dicken Gleitschicht aus Matrix bildendem fluorhaltigem Polymer besteht, in dem eine hohe Affinität zu Fluor besitzendes Metallpulver feindispergiert ist, sowie ein Verfahren zur Herstellung des Werkstoffs für Verbundlager.

Aus der EP-B-0 044 577 und der DE-C-29 28 081 ist ein Werkstoff für Verbundlager mit Kunststoff-Gleitschicht bekannt, der aus einer metallischen Stützschicht, vorzugsweise Stahlstützschicht, mit einer darauf befindlichen 30 bis 500 µm dicken Gleitschicht aus die Matrix bildendem fluorhaltigem Polymer, d.h. Polyvinylidenfluorid (PVDF), mit 5 bis 50 Vol.-% Bleiteilchen mit einer Korngröße von ≦ 50 µm besteht, und die das Gleitverhalten verbessernde Stoffe wie PTFE, MoS₂, Graphit als Einlagerungen in feindisperser Form enthalten kann. Die Kunststoff-Gleitschicht ist in vorteilhafter Weise auf eine auf der Stützschicht porös aufgesinterten oder aufgespritzten Rauhschicht mit einer Dicke von 250 bis 350 µm aus gute Gleiteigenschaften aufweisendem metallischem Werkstoff, vorzugsweise Bronze, aufgetragen, wobei das Lückenvolumen der Rauhschicht mit dem Kunststoff der Gleitschicht ausgefüllt ist.

Die DE-A-3 520 068 befaßt sich mit einem Verbundwerkstoff für Gleitlager, bestehend aus einer metallischen Stützschicht, einer darauf aufplattierten Kupferschicht und einer porös auf dieser aufgesinterten Schicht einer Kupfer-Blei-Legierung. Die Poren dieser Trägerschicht sind mit einem Gemisch aus einer PTFE-Matrix, enthaltend 0,1 bis 50 Vol.% mindestens einer der Verbindungen FEP, PFA, ETFE, PVDF, PCTFE und EPA, sowie 0,1 bis 35 Vol.-% eines Metalloxidgemisches imprägniert und mit einer Dicke von 10 bis 30 µm beschichtet. Diese Mischung kann ferner ein metallisches Schmiermittel, wie Pb, Sn und/oder seine Legierungen, ein Metallsulfid, ein Metallfluorid, ein festes kohlenstoffhaltiges Schmiermittel, wie Graphitfluorid, Graphit, Koks, Kohlenstoff etc., ein faserartiges Material und Keramikmaterialien einzeln oder zu mehreren enthalten. Der beschichtete Verbundwerkstoff wird an Luft bei 327 bis 400°C während 2 bis 5 min gesintert und anschließend gewalzt.

Die aus diesen Verbundlagerwerkstoffen hergestellten Lagerkörper haben einen breiten Einsatzbereich gefunden, können jedoch in nachteiliger Weise sehr hohe mechanische und tribologische Belastungen, wie sie beispielsweise in Lagerungen von Hydraulikmotoren auftreten, nicht ertragen, d.h. ihre Lebensdauer ist unzulässig gering, so daß die Standzeit der Maschine begrenzt wird. Daraus resultiert die Forderung nach Verbundlagerwerkstoffen mit vergleichsweise größerer mechanischer Belastbarkeit, größerem Verschleißwiderstand und möglichst kleiner Reibung.

Es ist deshalb die Aufgabe vorliegender Erfindung, einen gegenüber dem eingangs beschriebenen Verbundlagerwerkstoff bezüglich Verschleißraten und Lebensdauer verbesserten Verbundlagerwerkstoff bereitzustellen.

Die Lösung dieser Aufgabe besteht darin, daß das 5 bis 50 Masse-%, vorzugsweise 30 bis 40 Masse-% Metallpulver mit einer Korngröße von ≦ 40 µm feindispergiert enthaltende fluorhaltige Polymer in einem mittels CuKα-Strahlung erstellten Röntgendiffraktogramm ein scharfes Intensitätsmaximum bei einem doppeltem Braggwinkel von 2Θ = 18,07 ± 0,03° sowie einen Schmelzbereich von 320 bis 350°C aufweist und 5 bis 30 Masse-%, vorzugsweise 15 bis 25 Masse-% Metallfluorid sowie 0,5 bis 5,0 Masse-%, vorzugsweise 1,0 bis 3,0 Masse-% Metalloxifluorid enthält.

Als Metallpulver, die eine besonders hohe Affinität zu Fluor besitzen, kommen für den vorliegenden Verwendungszweck insbesondere solche von Blei, Zinn, Zink, Indium, Thallium, Kadmium, Wismut, Barium, Kupfer, Silber und deren Legierungen einzeln oder zu mehreren in Betracht, wobei auch Lagermetalle auf Blei- und Zinn-Basis mitumfaßt sind.

Der erfindungsgemäß aufgebaute Verbundlagerwerkstoff zeichnet sich durch vergleichsweise geringe Verschleißraten und eine hohe Ermüdungsfestigkeit aus, der eine einwandfreie Funktion der daraus hergestellten Lagerkörper auch noch nach sehr langen Laufzeiten gewährleistet. Die Matrix kann zur Verbesserung der Gleiteigenschaften sowie zur Stabilisierung noch 1 bis 20 Masse-%, vorzugsweise 5 bis 15 Masse-% feindispergierte Pulverteilchen, bestehend aus PTFE, MoS₂, Graphit, ZnS, BaSO₄ einzeln oder zu mehreren enthalten, wobei die Korngröße dieser Pulverteilchen zweckmäßigerweise in Anpassung an die Metallpulverteilchen ≦ 40 µm ist.

Im Rahmen der vorzugsweisen Ausgestaltung des erfindungsgemäßen Verbundlagerwerkstoffs sind in der Matrix 15 bis 25 Masse-% Bleifluorid, 1 bis 3 Masse-% Bleioxidfluorid und 30 bis 40 Masse-% Blei sowie ggf. noch 5 bis 15 Masse-% PTFE enthalten.

Eine bevorzugte Ausführungsform der Matrix besteht in der Zusammensetzung 59 Masse-% fluorhaltiges Polymer, 8 Masse-% Blei, 24 Masse-% PbF₂, 1 Masse-% PbOF₂, 8 Masse-% PTFE.

In einer zweiten Zusammensetzung kann die Matrix aus 53 Masse-% fluorhaltigem Polymer, 8 Masse-% PTFE, 15 Masse-% PbF₂, 4 Masse-% PbOF₂, 20 Masse-% Blei bestehen.

Nach einer weiteren Ausführungsform ist die Matrix aus 43 Masse-% fluorhaltigem Polymer, 18 Masse-% PTFE, 15 Masse-% PbF₂, 4 Masse-% PbOF₂ und 20 Masse-% Blei aufgebaut.

Die erfindungsgemäße Matrix ist unmittelbar mit der mechanisch oder chemisch aufgerauhten Oberfläche der metallischen Stützschicht verbunden. Es besteht aber auch die Möglichkeit, die Matrix über eine Zwischenschicht aus porös aufgesintertem metallischen Gleitwerkstoff, vorzugsweise Bronze, mit der Stützschicht zu verbinden, wobei die Gleitschichtmasse das Lückenvolumen ausfüllt und über den Spitzen der Zwischenschicht eine Gleitschicht von 10 bis 350 µm Dicke vorhanden ist.

Bei dem Verfahren zur Herstellung des Verbundlagerwerkstoffs wird ein Gemisch aus 30 bis 80 Masse-% fluorhaltigem Polymer und 5 bis 50 Masse-% eine hohe Affinität zu Fluor besitzendes Metallpulver auf eine metallische Stützschicht aufgetragen, aufgewalzt und auf eine Temperatur von > 330°C, vorzugsweise 345 bis 400°C, erwärmt, bei dieser Temperatur 5 bis 60 min, vorzugsweise 10 bis 30 min, gehalten und dann in einer Zeit von 0,5 bis 10 min, vorzugsweise 1 bis 4 min auf wenigstens 100°C kontinuierlich abgekühlt.

Die Herstellung des Verbundlagerwerkstoffs kann sowohl auf kontinuierliche Weise, indem eine bandförmige Stützschicht fortlaufend beschichtet wird, als auch in diskontinuierlicher Weise, indem streifenförmige Abschnitte einzeln beschichtet werden, erfolgen.

Im folgenden ist die Erfindung anhand eines Ausführungsbeispiels sowie von Zeichnungen näher erläutert. Es zeigen:

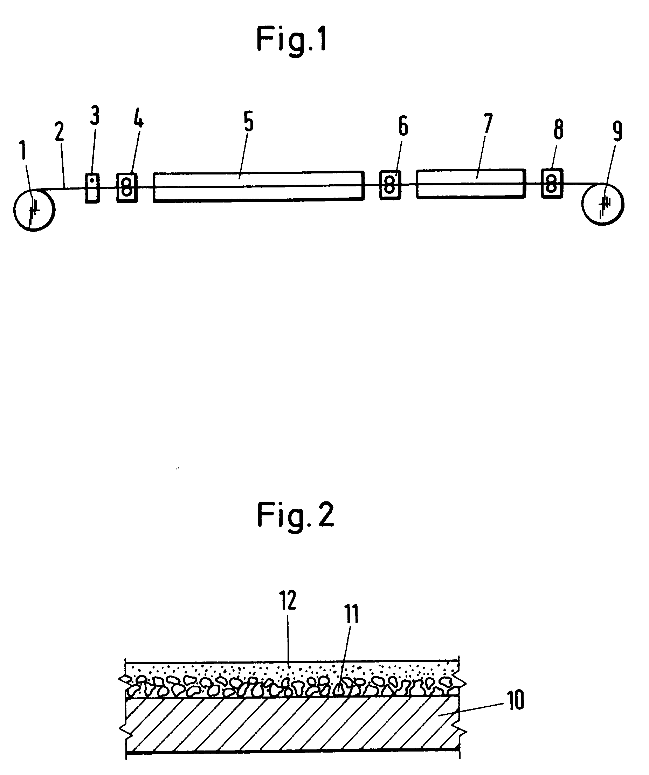

Fig. 1 eine schematische Darstellung der Vorrichtung zur Durchführung des Verfahrens und Herstellung des Verbundlagerwerkstoffs;
Fig. 2 einen Schnitt durch den Verbundlagerwerkstoff und
Fig. 3 und 4 graphische Darstellungen der Versuchsergebnisse.

Das auf dem Haspel (1) aufgewickelte Band (2), das aus dem als Stützschicht dienenden Stahlband (10) und der darauf aus Bleibronze porös gesinterten Rauhgrundschicht (11) besteht, wird kontinuierlich von dem Haspel (1) abgewickelt und rauhgrundseitig aus einem mit einem Rührwerk ausgestatteten Behälter (3) mit einer Pulvermischung aus 60 Masse-% Polyvinylidenfluorid (PVDF), 30 Masse-% Blei und 10 Masse-% Polytetrafluoräthylen (PTFE) gleichmäßig beschichtet. Nachdem das Band (2) das Walzgerüst (4) durchlaufen hat, in dem die offenen Poren des Rauhgrundes (11) so mit der Pulvermischung ausgefüllt sind, daß über den Spitzen des Rauhgrundes (11) eine Gleitschicht (12) vorhanden ist, wird das beschichtete Band (2) durch den Durchlaufofen (5) geführt und auf 345°C für die Dauer von 15 min erwärmt. Dabei wird das PVDF aufgeschmolzen und in ein fluorhaltiges Polymer umgewandelt, in das neben l2 Masse-% Blei und 10 Masse-% PTFE noch 20 Masse-% Bleifluorid sowie 2,5 Masse-% Bleioxifluorid eingelagert sind und das durch ein in einem mittels CuKα-Strahlung erstellten Röntgendiffraktogramm bei einem doppelten Braggwinkel von 2ϑ = 18,07 ± 0,03° liegendes Intensitätsmaximum sowie einen Schmelzbereich von 320 bis 350°C charakterisiert ist. Nach dem Austritt aus dem Ofen (5) wird das fluorhaltige Polymer in dem Walzgerüst (6) nachverdichtet sowie geglättet und anschließend in dem Durchlaufofen (7) innerhalb von 5 min kontinuierlich auf eine Temperatur von etwa 100°C abgekühlt. In dem nachfolgenden Walzgerüst (8) wird der hergestellte Verbundlagerwerkstoff kalibriert und schließlich auf den Haspel (9) aufgewickelt. Aus dem bandförmigen Verbundlagerwerkstoff lassen sich ohne jede Nachbehandlung bzw. Nachbearbeitung ohne Schwierigkeiten Gleitlagerelemente, insbesondere Lagerbuchsen, Lagerschalen, Bundbuchsen sowie Anlaufscheiben, herstellen.

Um das tribologische Verhalten des erfindungsgemäß ausgebildeten Verbundlagerwerkstoffs darzustellen, ist nachfolgend ein Vergleichsversuch beschrieben, bei dem eine Lagerbuchse, gefertigt aus dem nach vorstehend beschriebenen Verfahrensmaßnahmen hergestellten Verbundlagerwerkstoff, mit einer Lagerbuchse, die aus einem Verbundlagerwerkstoff nach dem Stand der Technik gemäß der EP-B 0 044 577 hergestellt ist und aus einer Stahlstützschicht mit einer darauf porös gesinterten Bronzeschicht, deren offene Poren bis über ihre Spitzen unter Ausbildung einer Gleitschicht mit einer gesinterten Mischung aus 50 Masse-% PVDF, 40 Masse-% Blei und 10 Masse-% PTFE gefüllt sind, besteht, bezüglich Reibmoment und Verschleiß verglichen wird.

Das Reibmoment und der Verschleiß wurden mit einer Prüfmaschine gemessen, bei der ein aus Stahl vom Typ C35 weich bestehender, eine Oberflächenrauhigkeit von R_{A} = 0, 2 µm aufweisender und mit einer Gleitgeschwindigkeit von 0,3 m/s rotierender Lagerzapfen eine Prüflagerbuchse der Abmessung ⌀ 21 x ⌀ 22 x 15 mm mit einem Spiel von 0,03 mm trägt. Die Prüflagerbuchse ist in einen als Pendel ausgebildeten und mit einer spezifischen Belastung von 3,3 N/mm² belasteten Lagerkörper eingepreßt. Das Reibmoment wird aus der Drehung der Prüflagerbuchse über den Ausschlag des als Pendel ausgebildeten Lagerkörpers ermittelt. Der Verschleiß wird jeweils nach einem Gleitweg von 8, 16, 32 und 48 km gemessen.

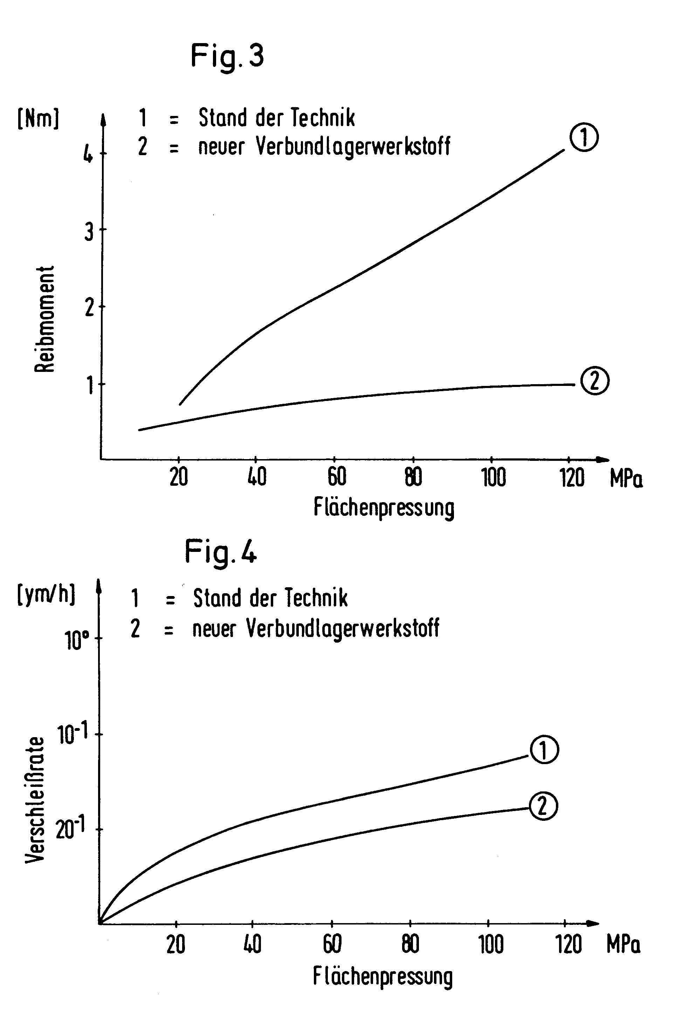

Die Versuchsergebnisse sind in Fig. 3 und Fig. 4 graphisch dargestellt und zeigen, daß die aus dem erfindungsgemäß aufgebauten Verbundlagerwerkstoff gefertigten Lagerbuchsen bezüglich Reibmoment (Nm) und Verschleißrate (µm/h) in Abhängigkeit von der Flächenpressung (MPa) deutlich denjenigen Lagerbuchsen, die aus dem Verbundlagerwerkstoff nach dem Stand der Technik bestehen, überlegen sind.

## Patentansprüche

1. Werkstoff für Verbundlager mit Kunststoff-Gleitschicht, der aus einer metallischen Stützschicht (10), vorzugsweise aus Stahl, Bronze oder einer hochfesten Aluminiumlegierung, und einer mit dieser verbundenen 30 bis 500 µm, vorzugsweise 50 bis 250 µm dicken Gleitschicht (12) aus Matrix bildendem fluorhaltigem Polymer besteht, in dem 5 bis 50 Masse-%, vorzugsweise 30 bis 40 Masse-% eine hohe Affinität zu Fluor besitzendes Metallpulver mit einer Korngröße von ≦ 40 µm feindispergiert sind, wobei das fluorhaltige Polymer in einem mittels CuKα-Strahlung erstellten Röntgendiffraktogramm ein scharfes Intensitätsmaximum bei einem doppelten Braggwinkel von 2Θ = 18,07 ± 0,03° sowie einen Schmelzbereich von 320 bis 350°C besitzt und 5 bis 30 Masse-%, vorzugsweise 15 bis 25 Masse-% Metallfluorid sowie 0,5 bis 5,0 Masse-%, vorzugsweise 1,0 bis 3,0 Masse-% Metalloxifluorid enthält.

2. Werkstoff nach Anspruch 1, dadurch gekennzeichnet, daß als Metallpulver Blei, Zinn, Zink, Indium, Thallium, Kadmium, Wismut, Barium, Kupfer, Silber und deren Legierungen einzeln oder zu mehreren in dem fluorhaltigem Polymer dispergiert ist.

3. Werkstoff nach den Ansprüchen 1 und 2, gekennzeichnet durch den Zusatz von 1 bis 20 Masse-%, vorzugsweise 5 bis 15 Masse-% feindispergierten Pulverteilchen mit einer Korngröße von ≦ 40 µm, bestehend aus PTFE, MoS₂, Graphit, ZnS, BaSO₄ und/oder Stearaten.

4. Werkstoff nach den Ansprüchen 1 bis 3, dadurch gekennzeichnet, daß die Kunststoff-Gleitschicht (12) unmittelbar mit der mechanisch oder chemisch aufgerauhten Oberfläche der Stützschicht (10) verbunden ist.

5. Werkstoff nach den Ansprüchen 1 bis 3, dadurch gekennzeichnet, daß die Kunststoff-Gleitschicht (12) über eine porös auf der Stützschicht aufgesinterte oder aufgespritzte, aus einem metallischen Gleitwerkstoff bestehende Schicht (11), vorzugsweise aus Bronze, mit der Stützschicht (10) unter Ausfüllung der Poren und Ausbildung einer Deckschicht verbunden ist.

6. Verfahren zur Herstellung von Werkstoff für Verbundlager nach den Ansprüchen 1 bis 5, bei dem ein Gemisch aus 30 bis 80 Masse-% fluorhaltigem Polymer und 5 bis 50 Masse-% eine hohe Affinität zu Fluor besitzendes Metallpulver auf die metallische Stützschicht aufgetragen, aufgewalzt, auf eine Temperatur von > 330°C, vorzugsweise 345 bis 400°C, erwärmt, bei dieser Temperatur 5 bis 60 min, vorzugsweise 10 bis 30 min, gehalten und dann in einer Zeit von 0,5 bis 10 min, vorzugsweise 1 bis 4 min auf wenigstens 100°C kontinuierlich abgekühlt wird.

## Claims

1. A material for composite bearings having a plastic sliding layer, which material consists of a metallic backing layer (10), preferably of steel, bronze or a high-strength aluminium alloy, and a sliding layer (12) of matrix-forming fluorine-containing polymer which is joined thereto and is 30 to 500 µm, preferably 50 to 250 µm, thick, in which 5 to 50% by weight, preferably 30 to 40% by weight, of metal powder having a high affinity with fluorine and having a grain size of ≦ 40 µm is finely dispersed, the fluorine-containing polymer having a sharp intensity peak at a double Bragg angle of 2Θ = 18.07 ± 0.03° in an X-ray diffractogram prepared by means of CuKα radiation, and also a melting range of 320 to 350°C and contains 5 to 30% by weight, preferably 15 to 25% by weight, metal fluoride and 0.5 to 5.0% by weight, preferably 1.0 to 3.0% by weight, metal oxyfluoride.

2. A material according to Claim 1, characterised in that as the metal powder lead, tin, zinc, indium, thallium, cadmium, bismuth, barium, copper, silver and alloys thereof are used is dispersed individually or in combination in the fluorine-containing polymer.

3. A material according to Claims 1 and 2, characterised by the addition of 1 to 20% by weight, preferably 5 to 15% by weight, finely-dispersed powder particles having a grain size of ≦ 40 µm, consisting of PTFE, MoS₂, graphite, ZnS, BaSO₄ and/or stearates.

4. A material according to Claims 1 to 3, characterised in that the plastic sliding layer (12) is joined directly to the mechanically or chemically roughened surface of the backing layer (10).

5. A material according to Claims 1 to 3, characterised in that the plastic sliding layer (12) is joined via a layer (11) consisting of a metallic sliding material, preferably of bronze, porously sintered or sprayed on , to the backing layer (10), filling in the pores and forming a covering layer.

6. A method for producing material for composite bearings according to Claims 1 to 5, in which a mixture of 30 to 80% by weight fluorine-containing polymer and 5 to 50% by weight metal powder having a high affinity to fluorine is applied to the metal backing layer, is rolled on, heated to a temperature of > 330°C, preferably 345 to 400°C, is held at this temperature for 5 to 60 minutes, preferably 10 to 30 minutes, and is then continuously cooled to at least 100°C in a time of 0.5 to 10 minutes, preferably 1 to 4 minutes.

## Revendications

1. Matériau pour paliers composites comportant une couche anti-friction de matière plastique qui se compose d'une couche de support métallique (10), de préférence en acier, en bronze ou en un alliage d'aluminium à haute résistance, et d'une couche anti-friction (12) liée à celle-ci, d'une épaisseur de 30 à 500 µm, de préférence de 50 à 250 µm, d'un polymère fluoré formant une matrice, dans lequel sont finement dispersés 5 à 50 % en masse, de préférence 30 à 40 % en masse, d'une poudre métallique possédant une forte affinité pour le fluor, ayant une grosseur de grains inférieure ou égale à 40 µm, le polymère fluoré présentant, dans un diagramme de diffraction des rayons X obtenu avec le rayonnement Kα du cuivre, un maximum d'intensité net pour un double angle de Bragg 2Θ = 18,07 ± 0,03 °C, ainsi qu'un domaine de fusion de 320 à 350 °C et contenant 5 à 30 % en masse, de préférence 15 à 25 % en masse, d'un fluorure métallique et 0,5 à 5,0 % en masse, de préférence 1,0 à 3,0 % en masse, d'un oxyfluorure métallique.

2. Matériau selon la revendication 1, caractérisé en ce qu'on a dispersé dans le polymère fluoré, comme poudre métallique, du plomb, de l'étain, du zinc, de l'indium, du thallium, du cadmium, du bismuth, du baryum, du cuivre, de l'argent et leurs alliages, isolément ou en mélange.

3. Matériau selon les revendications 1 ou 2, caractérisé par l'addition de 1 à 20 % en masse, de préférence de 5 à 15 % en masse, de particules de poudre finement dispersées ayant une grosseur de grains inférieure ou égale à 40 µm, constituées de PTFE, de MoS₂, de graphite, de ZnS, de BaSO₄ et/ou de stéarates.

4. Matériau selon les revendications 1 à 4, caractérisé on ce que la couche anti-friction de matière plastique (12) est liée directement à la surface rendue rugueuse mécaniquement ou chimiquement de la couche de support (10).

5. Matériau selon les revendications 1 à 3, caractérisé en ce que la couche anti-friction de matière plastique (12) est liée à la couche de support (10) par l'intermédiaire d'une couche (11) constituée d'un matériau anti-friction métallique, appliquée par frittage ou pulvérisation de manière à être poreuse sur la couche de support, de préférence en bronze, avec remplissage des pores et formation d'une couche de recouvrement.

6. Procédé de fabrication d'un matériau pour paliers composites selon les revendications 1 à 5, dans lequel on applique sur la couche de support métallique un mélange de 30 à 80 % en masse d'un polymère fluoré et de 5 à 50 % en masse d'une poudre métallique possédant une forte affinité pour le fluor, on le lamine, on le porte à une température supérieure à 330 °C, de préférence de 345 à 400 °C, on le maintient à cette température pendant 5 à 60 minutes, de préférence 10 à 30 minutes, puis on le refroidit en continu, en 0,5 à 10 minutes, de préférence en 1 à 4 minutes, à 100 °C au moins.
